# FASCICULE DE BREVET EUROPEEN

(11) **EP 3 339 935 B1**
(45) Date de publication et mention de la délivrance du brevet: **02.10.2019**
(21) Numéro de dépôt: 17205851.3
(22) Date de dépôt: 07.12.2017
(51) Int. Cl.: G02B 27/01

(54) **VÉHICULE FERROVIAIRE COMPRENANT UN AFFICHEUR TÊTE HAUTE**
SCHIENENFAHRZEUG, DAS EIN HEAD-UP-DISPLAY UMFASST
A RAILWAY VEHICLE COMPRISING A HEAD-UP DISPLAY

(30) Priorité: 08.12.2016 FR 1662170
(43) Date de publication de la demande: 27.06.2018
(73) Titulaire: ALSTOM Transport Technologies, 93400 Saint-Ouen (FR)
(72) Inventeur: MIGLIANICO, Denis, 75009 PARIS (FR); MOYART, Luc, 59110 LA MADELEINE (FR); HOUBRE, François, 06530 Le Tignet (FR); NAGTEGAELE, Patrice, 06370 Mouans Sartoux (FR); BLANCHE, Jonathan, 06600 ANTIBES (FR)
(74) Mandataire: Lavoix

(56) Documents cités:
- EP-A1- 2 466 361
- US-A1- 2013 235 454
- US-A1- 2015 103 408

## Description

La présente invention concerne un véhicule ferroviaire comprenant une cabine de pilotage, la cabine de pilotage comprenant un afficheur tête haute.

La conduite d'un véhicule, tel qu'un véhicule ferroviaire, est conditionnée en grande partie par la visibilité qu'a le conducteur de son environnement proche. L'environnement proche comprend, par exemple, des dispositifs de signalisation, des piétons, des cyclistes ou encore d'autres véhicules. Une bonne visibilité permet au conducteur de prendre des décisions appropriées aux moments opportuns et limite, ainsi, les risques de collisions ou d'accidents de voyageurs.

Pour les besoins de la conduite, le conducteur est amené à consulter régulièrement le tableau de bord du véhicule. Cela implique que pendant un bref instant, le conducteur ne regarde plus son environnement, et notamment, la route.

Afin de remédier à cet inconvénient, il est connu d'intégrer des afficheurs tête haute dans le tableau de bord du véhicule. De tels afficheurs permettent de projeter dans le champ de vision du conducteur en superposition de son environnement extérieur des informations habituellement affichées sur le tableau de bord. Le conducteur n'a alors plus besoin de quitter, même un bref instant, l'environnement extérieur des yeux pour consulter le tableau de bord.

Toutefois, de tels afficheurs ne sont pas adaptés aux morphologies de tous les types de conducteurs. L'utilisation de tels afficheurs par des conducteurs de morphologies différentes n'est donc pas optimale.

Il existe donc un besoin pour un afficheur tête haute susceptible de convenir à une pluralité de conducteurs de morphologies différentes.

A cet effet, l'invention a pour objet un véhicule ferroviaire comprenant une cabine de pilotage, la cabine de pilotage comprenant un afficheur tête haute, l'afficheur comprenant :
- un projecteur propre à projeter des images,
- une lame propre à afficher les images projetées par le projecteur, et
- un système de déplacement de la lame et du projecteur, le système de déplacement étant propre à faire pivoter la lame et le projecteur par rapport à un axe principal entre une pluralité de positions d'ajustement.

Selon d'autres aspects avantageux de l'invention, le véhicule comprend une ou plusieurs des caractéristiques suivantes, prises isolément ou suivant toutes les combinaisons techniquement possibles :
- le système de déplacement est propre à faire pivoter la lame par rapport à l'axe principal entre une position rétractée dans laquelle la lame est rétractée dans un espace interne défini dans l'afficheur et une position déployée dans laquelle la lame est déployée hors de l'espace interne, la position déployée de la lame correspondant à l'une de la pluralité de positions d'ajustement ;
- le système de déplacement comprend un premier actionneur et un bras, le bras étant solidaire de la lame, le premier actionneur étant propre à faire pivoter le bras autour de l'axe principal de sorte à entraîner le pivotement de la lame autour de l'axe principal entre la position rétractée et la position déployée ;
- l'une des positions d'ajustement est une position de référence, le système de déplacement étant propre à faire pivoter la lame et le projecteur selon l'axe principal avec le même écart angulaire de part et d'autre de la position de référence ;
- l'écart angulaire maximal entre la position de référence et une position d'ajustement distincte de la position de référence est de plus ou moins 5 degrés ;
- la position de référence est la position dans laquelle le centre de la lame est au centre du champ de vision non déformé d'un modèle de conducteur ;
- le système de déplacement comprend un deuxième actionneur, le deuxième actionneur étant propre à faire pivoter le projecteur et la lame autour de l'axe principal entre la pluralité de positions d'ajustement ;
- le premier actionneur et le deuxième actionneur sont un même et unique actionneur ;
- l'afficheur comprend une interface utilisateur propre à recevoir des commandes du conducteur du véhicule, le système de déplacement étant actionné en fonction de la commande reçue par l'interface utilisateur ;
- l'axe principal est un axe transversal traversant le projecteur.

D'autres caractéristiques et avantages de l'invention apparaîtront à la lecture de la description qui suit de modes de réalisation de l'invention, donnés à titre d'exemple uniquement et en référence aux dessins qui sont :
- figure 1, une vue schématique de côté d'une cabine de pilotage d'un véhicule,
- figure 2, une vue schématique en perspective d'un afficheur selon un mode de réalisation de l'invention, l'afficheur comprenant une lame,
- figure 3, une vue schématique de côté partielle de l'afficheur de la figure 2, la lame étant dans une position rétractée,
- figure 4, une autre vue schématique de côté partielle de l'afficheur de la figure 2, la lame étant dans une position déployée, et
- figure 5, une vue schématique de côté de l'afficheur de la figure 3 lorsque l'afficheur est positionné dans la cabine de pilotage d'un véhicule, l'afficheur étant déplaçable selon une pluralité de positions d'ajustement.

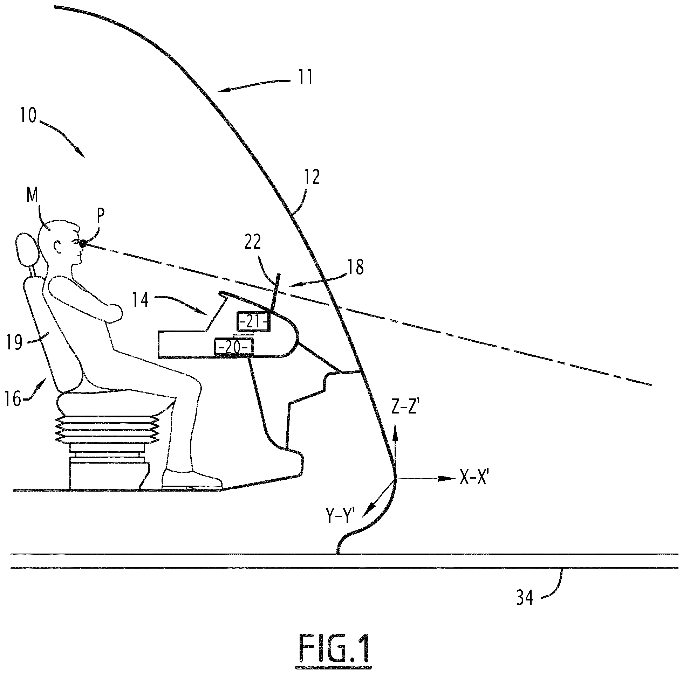

Une cabine 10 de pilotage d'un véhicule 11 est illustrée sur la figure 1.

Le véhicule 11 est par exemple un véhicule ferroviaire, tel qu'un tramway, un train ou encore un tram-train.

Dans la suite de la description, les termes « avant » et « arrière » sont définis par rapport au sens de circulation du véhicule 11.

Le terme « longitudinal » est défini par rapport à la direction selon laquelle circule le véhicule 11, c'est-à-dire, dans le cas d'un véhicule ferroviaire, la direction dans laquelle s'étendent les rails sur lesquels ledit véhicule circule. Le terme « transversal » est défini par rapport à une direction sensiblement perpendiculaire à la direction longitudinale dans un plan horizontal, c'est-à-dire la direction selon laquelle les rails sont écartés l'un de l'autre. La direction perpendiculaire à la direction longitudinale et à la direction transversale est appelée « direction verticale ».

Les termes « haut » et « bas » sont définis par rapport à la direction verticale du véhicule 11, le «bas» étant relativement plus proche que le «haut» des rails sur lesquels le véhicule 11 circule. Les termes « supérieur » et « inférieur » sont compris de manière analogue aux termes respectivement « haut » et « bas ».

La cabine de pilotage 10 s'étend suivant la direction longitudinale selon un axe longitudinal X-X', suivant la direction transversale selon un axe transversal Y-Y' et suivant la direction verticale selon un axe vertical Z-Z'. De tels axes longitudinal X-X', transversal Y-Y' et vertical Z-Z' sont illustrés sur la figure 1.

La cabine de pilotage 10 comprend un pare-brise 12, un tableau de bord 14, un emplacement conducteur 16 et un afficheur tête haute 18.

L'emplacement conducteur 16 comprend un siège 19 sur lequel le conducteur du véhicule 11 est susceptible de s'asseoir lors de la conduite du véhicule 11.

Un modèle de conducteur M est fourni comprenant, par exemple, des dimensions du modèle de conducteur et la posture de conduite dudit modèle de conducteur dans la cabine de pilotage 10.

Le modèle de conducteur M représente un gabarit humain. Un tel gabarit est, par exemple, issu de la norme machine NF EN 894-4 version 2010.

Le modèle de conducteur M représente, par exemple, le cinquantième percentile de la population masculine, c'est-à-dire un homme de taille moyenne. La taille d'un tel homme est de 1749 mm selon la norme machine NF EN 894-4 version 2010.

En variante, le modèle de conducteur M représente le cinquième percentile de la population féminine, c'est-à-dire une femme de petite taille. La taille d'une telle femme est de 1560 mm selon la norme machine NF EN 894-4 version 2010.

Encore en variante, le modèle de conducteur M représente le quatre-vingt quinzième percentile de la population masculine, c'est-à-dire un homme de grande taille. La taille d'un tel homme est de 1911 mm selon la norme machine NF EN 894-4 version 2010.

La posture de conduite du modèle de conducteur M est, définie par exemple, par les éléments suivants :
- le dossier du siège de l'emplacement conducteur 16 est incliné de 5° à 10° vers l'arrière par rapport à la verticale,
- le dos du modèle de conducteur est en contact avec le dossier du siège,
- l'amortissement du siège est à une valeur moyenne, et
- le modèle de conducteur est en mesure de piloter le véhicule 11.

L'afficheur tête haute 18 est positionné dans la cabine de pilotage 10. De préférence, l'afficheur tête haute 18 est positionné dans le tableau de bord 14 de la cabine de pilotage 10.

L'afficheur tête haute 18 comprend un calculateur 20, un projecteur 21 et une lame 22.

Le calculateur 20 est propre à générer des images ou des séquences vidéos. Les images générées par le calculateur 20 sont, par exemple, relatives à l'indicateur de vitesse du véhicule 11, à la consommation en énergie du véhicule 11, à des recommandations sur le niveau de traction ou de freinage du véhicule 11, à des alarmes relatives au dysfonctionnement de certains composants du véhicule 11, à des indications sur des changements d'aiguillage, à des indicateurs sur l'avance ou le retard du véhicule par rapport à une table horaire prédéfinie, à des manoeuvres ou des attelages à réaliser ou encore à des indications sur des endroits spécifiques traversés par le véhicule 11.

Le projecteur 21 est un système optique propre à projeter les images générées par le calculateur 20 dans le champ de vision du conducteur.

Le projecteur 21 est situé, selon l'axe longitudinal X-X', entre la lame 22 et l'emplacement conducteur 16.

La lame 22 est aussi appelée « combiner ».

La lame 22 est, de préférence, courbée selon un angle de courbure de sorte que la surface concave de la lame 22 soit face à l'emplacement conducteur 16.

En variante, la lame 22 est plane.

La dimension de la lame 22 selon la direction verticale Z-Z', aussi appelée « hauteur » est, par exemple, supérieure ou égale à 60 millimètres (mm). La dimension de la lame 22 selon l'axe transversal Y-Y', aussi appelée « longueur » est, par exemple, supérieure ou égale à 150 mm.

La lame 22 est, par exemple, une lame semi-transparente.

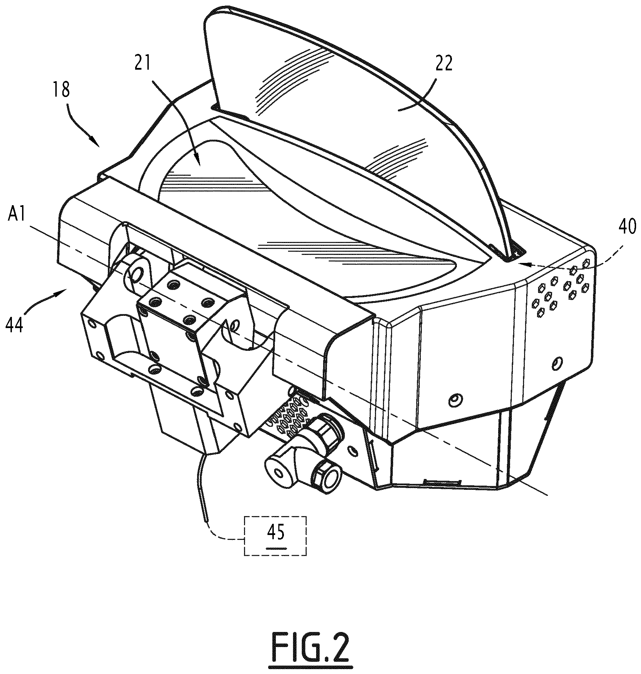

Un exemple d'un mode de réalisation particulier d'un afficheur 18 est illustré sur les figures 2 à 5.

L'afficheur 18 comprend, outre les caractéristiques énoncées précédemment, les caractéristiques suivantes.

L'afficheur 18 comprend un espace interne 40 de réception de la lame 22.

Dans une variante, l'espace interne 40 est un espace interne du projecteur 21 de l'afficheur 18.

L'afficheur 18 comprend, en outre, un système 44 de déplacement de la lame 22 et une interface utilisateur 45.

Le système de déplacement 44 comprend un premier mécanisme 46 et un deuxième mécanisme 48.

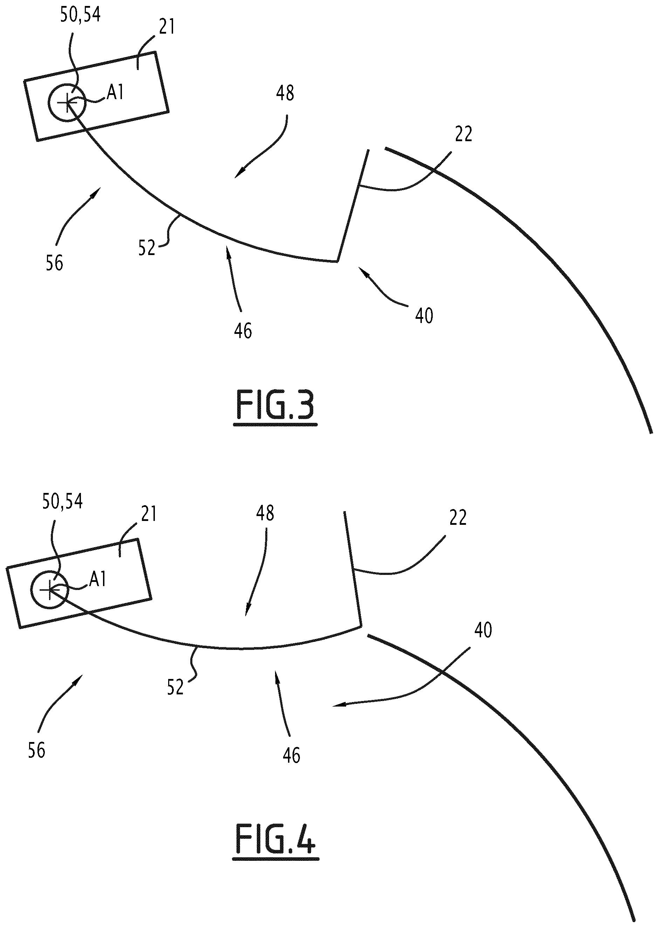

Le premier mécanisme 46 est propre à faire pivoter la lame 22 par rapport à un axe principal A1 entre une position rétractée, visible sur la figure 3, dans laquelle la lame 22 est rétractée dans l'espace interne 40 de l'afficheur 18 et une position déployée, visible sur la figure 4, dans laquelle la lame 22 est déployée hors du projecteur 21. La position rétractée est la position dans laquelle la lame 22 est entièrement reçue dans l'espace interne 40 de l'afficheur 18. La position déployée est la position dans laquelle la lame 22 est entièrement positionnée hors de l'espace interne 40 de l'afficheur 18.

Le premier mécanisme 46 comprend un premier actionneur 50 et un bras 52 solidaire de la lame 22.

Le premier actionneur 50 est, par exemple, un moteur électrique.

Le premier actionneur 50 est propre à faire pivoter le bras 52 autour de l'axe principal A1 de sorte à entraîner le pivotement de la lame 22 autour de l'axe principal A1 entre la position rétractée et la position déployée.

Le deuxième mécanisme 48 comprend un deuxième actionneur 54.

Le deuxième actionneur 54 est, par exemple, un moteur électrique.

Le deuxième actionneur 54 est propre à faire pivoter un ensemble 56 par exemple, via le bras 52, autour de l'axe principal A1 entre une pluralité de positions d'ajustement. L'ensemble 56 comprend au moins le projecteur 21 et la lame 22 de l'afficheur 18, Dans une variante, l'ensemble 56 comprend l'intégralité de l'afficheur 18.

Le deuxième mécanisme 48 est, par exemple, mis en oeuvre par un ou plusieurs éléments, chaque élément étant choisi parmi le groupe constitué de : un jeu combiné de bielles, une association d'une roue et d'une vis sans fin, des cames, un système de rails, un ensemble comprenant au moins une chaine et au moins un pignon et un ensemble comprenant au moins une poulie et au moins une courroie.

En variante, le deuxième actionneur 54 et le premier actionneur 50 sont confondus, c'est-à-dire que le deuxième actionneur 54 et le premier actionneur 50 forment un même et unique actionneur.

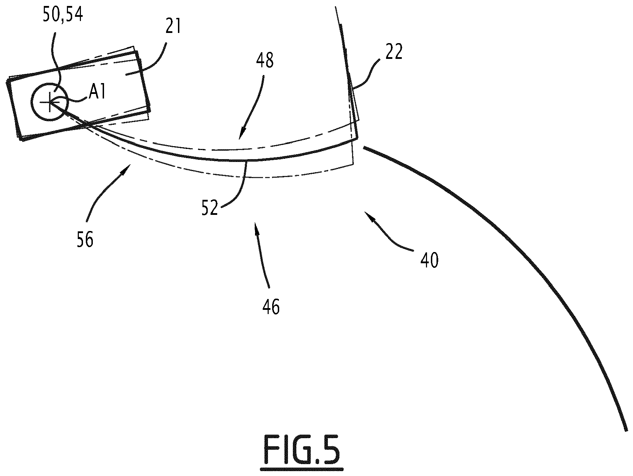

Comme visible sur la figure 5, lorsque la lame 22 est dans la position déployée, le deuxième actionneur 54 est propre à faire pivoter l'ensemble 56 autour de l'axe principal A1 entre une pluralité de positions d'ajustement.

L'une des positions d'ajustement est une position de référence. Plus précisément, la position de référence est définie comme étant la position d'ajustement dans laquelle le centre de la lame 22 est situé sensiblement au centre du champ de vision non déformé du modèle M de conducteur. Le champ de vision non déformé du modèle M de conducteur correspond au champ de vision du modèle M de conducteur lorsqu'une déformation homogène spatialement est appliquée sur chaque portion des images projetées par le projecteur 21 sur la lame 22 (dans le champ de vision du modèle M de conducteur), par rapport aux images de base, c'est-à-dire aux images avant que lesdites images soient projetées par le projecteur 21 sur la lame 22. Une telle déformation est, par exemple, dues aux aberrations introduites par des optiques du projecteur 21. Dans une telle position de référence, la lame 22 est avantageusement située dans un plan perpendiculaire à la direction du regard du modèle de conducteur en posture de conduite.

Comme visible sur la figure 5, le deuxième actionneur 54 est propre à faire pivoter l'ensemble 56 comprenant au moins le projecteur 21 et la lame 22 autour de l'axe principal A1 avec le même écart angulaire de part et d'autre de la position de référence.

L'écart angulaire maximal entre la position de référence et une position d'ajustement distincte de la position de référence est de plus ou moins 5 degrés selon un sens de rotation de référence. Le sens de rotation de référence est, par exemple, le sens horaire. Un tel écart angulaire permet un ajustement de la position de la lame 22 par le conducteur.

En variante, un tel écart angulaire est de plus ou moins 6 degrés ou encore de plus ou moins 4 degrés.

L'axe principal A1 est un axe transversal. L'axe principal A1 traverse, par exemple, le projecteur 21. Cela permet notamment au projecteur 21 de ne pas masquer la visibilité du conducteur dans la position d'ajustement malgré son déplacement.

De plus, le pivotement conjoint du projecteur 21 et de la lame 22 permet de maintenir un angle fixe entre un axe de projection du projecteur 21 et la lame 22, l'angle étant égal à un angle préalablement paramétré. Ainsi, l'image projetée n'est pas déformée de manière inhomogène par un ajustement de la lame.

L'interface utilisateur 45 (illustrée sur la figure 2) est propre à recevoir des commandes du conducteur du véhicule 11. Le ou chaque actionneur 50, 54 est actionné en fonction de la commande reçue par l'interface utilisateur 45.

L'interface utilisateur 45 est, par exemple, une manette, un levier de commande ou des boutons poussoirs.

En variante, le premier actionneur 50 est automatiquement activé lorsque le véhicule 11 démarre de sorte à déplacer la lame 22 en position déployée.

En variante ou en complément, lorsque la lame 22 passe de la position rétractée à la position déployée, la lame 22 est automatiquement positionnée selon la position de référence.

Alternativement, la lame 22 est automatiquement positionnée selon la dernière position d'ajustement commandée par l'interface utilisateur 45.

En variante ou en complément, le premier actionneur 50 est automatiquement activé lorsque le conducteur quitte la cabine 10 de sorte à déplacer la lame 22 en position rétractée.

Un exemple de fonctionnement de l'afficheur 18 des figures 2 à 5 va maintenant être décrit.

Initialement, la lame 22 de l'afficheur 18 est dans la position rétractée, ce qui permet de protéger la lame 22. L'ensemble 56 est, par exemple, positionné dans une position où l'extrémité la plus haute de la lame 22 selon l'axe vertical Z-Z- est la plus éloignée selon la direction longitudinale X-X' de l'emplacement conducteur 16. Une telle position, dite position « grand conducteur », est particulièrement adapté pour un conducteur de grande taille, par exemple, pour le quatre-vingt quinzième percentile de la population masculine,

Le conducteur du véhicule 11 envoie une commande via l'interface utilisateur 45 pour déplacer la lame 22 dans la position déployée.

En variante, la commande est envoyée automatiquement.

Le premier mécanisme 46 déplace alors la lame 22 dans la position déployée.

Le deuxième mécanisme 48 déplace l'ensemble 56 dans la position de référence.

Puis, le conducteur envoie une nouvelle commande via l'interface utilisateur 45 pour déplacer l'ensemble 56, comprenant au moins la lame 22 et le projecteur 21, selon une position d'ajustement.

Le deuxième mécanisme 48 déplace alors l'ensemble 56 jusqu'à la position d'ajustement choisie.

Le conducteur a ainsi une vision ajustée et non déformée de manière inhomogène des informations projetées.

Lorsque l'afficheur 18 n'est plus utilisé, le conducteur envoie une nouvelle commande via l'interface utilisateur 45 pour déplacer la lame 22 dans la position rétractée.

En variante, la commande est automatiquement envoyée lorsque le conducteur quitte la cabine de pilotage 10.

L'ensemble 56 est alors placé dans la position dite grand conducteur, puis la lame est déplacée dans la position rétractée de ladite lame 22.

Ainsi, le premier mécanisme 46 de l'afficheur 18 illustré sur les figures 2 à 5 permet de protéger la lame 22 en rentrant la lame 22 dans le projecteur 21, lorsque la lame 22 n'est pas utilisée.

Le deuxième mécanisme 48 de l'afficheur 18 permet d'ajuster le réglage de l'afficheur 18 pour répondre aux besoins d'une grande gamme de conducteurs. En particulier, le deuxième mécanisme 48 permet l'ajustement de la hauteur des images projetées dans le champ de vision du conducteur par ajustement de la position angulaire de l'afficheur 18.

En outre, la position du projecteur 21 est maintenue fixe par rapport à la lame 22, ce qui permet de conserver une bonne qualité d'image.

Ainsi, un tel afficheur 18 est susceptible de convenir à une pluralité de conducteurs de morphologies différentes.

## Revendications

1. Véhicule ferroviaire (11) comprenant une cabine de pilotage (10), la cabine de pilotage (10) comprenant un afficheur tête haute (18), l'afficheur (18) comprenant :
• un projecteur (21) propre à projeter des images,
• une lame (22) propre à afficher les images projetées par le projecteur (21), et
• un système de déplacement (44) de la lame (22) et du projecteur (21), le système de déplacement (44) étant propre à faire pivoter la lame (22) et le projecteur (21) par rapport à un axe principal (A1) entre une pluralité de positions d'ajustement.

2. Véhicule (11) selon la revendication 1, dans lequel le système de déplacement (44) est propre à faire pivoter la lame (22) par rapport à l'axe principal (A1) entre une position rétractée dans laquelle la lame (22) est rétractée dans un espace interne (40) défini dans l'afficheur (18) et une position déployée dans laquelle la lame (22) est déployée hors de l'espace interne (40), la position déployée de la lame (22) correspondant à l'une de la pluralité de positions d'ajustement.

3. Véhicule (11) selon la revendication 2, dans lequel le système de déplacement (44) comprend un premier actionneur (50) et un bras (52), le bras (52) étant solidaire de la lame (22), le premier actionneur (50) étant propre à faire pivoter le bras (52) autour de l'axe principal (A1) de sorte à entraîner le pivotement de la lame (22) autour de l'axe principal (A1) entre la position rétractée et la position déployée.

4. Véhicule (11) selon l'une quelconque des revendications 1 à 3, dans lequel l'une des positions d'ajustement est une position de référence, le système de déplacement (44) étant propre à faire pivoter la lame (22) et le projecteur (21) selon l'axe principal (A1) avec le même écart angulaire de part et d'autre de la position de référence.

5. Véhicule (11) selon la revendication 4, dans lequel l'écart angulaire maximal entre la position de référence et une position d'ajustement distincte de la position de référence est de plus ou moins 5 degrés.

6. Véhicule (11) selon la revendication 4 ou 5, dans lequel la position de référence est la position dans laquelle le centre de la lame (22) est au centre du champ de vision non déformé d'un modèle de conducteur.

7. Véhicule (11) selon l'une quelconque des revendications 1 à 6, dans lequel le système de déplacement (44) comprend un deuxième actionneur (54), le deuxième actionneur (54) étant propre à faire pivoter le projecteur (21) et la lame (22) autour de l'axe principal (A1) entre la pluralité de positions d'ajustement.

8. Véhicule (11) selon les revendications 3 et 7, dans lequel le premier actionneur (50) et le deuxième actionneur (54) sont un même et unique actionneur.

9. Véhicule (11) selon l'une quelconque des revendications 1 à 8, dans lequel l'afficheur (18) comprend une interface utilisateur (45) propre à recevoir des commandes du conducteur du véhicule (11), le système de déplacement (44) étant actionné en fonction de la commande reçue par l'interface utilisateur (45).

10. Véhicule (11) selon l'une quelconque des revendications 1 à 9, dans lequel l'axe principal (A1) est un axe transversal traversant le projecteur (21).

## Patentansprüche

1. Schienenfahrzeug (11), das eine Steuerkabine (10) umfasst, wobei die Steuerkabine (10) eine Head-up Anzeigeeinheit (18) umfasst, wobei die Anzeigeeinheit aufweist:
• einen Projektor (21), der geeignet ist, Bilder zu projizieren,
• ein Anzeigeblatt (22), das geeignet ist, die von dem Projektor (21) projizierten Bilder anzuzeigen und
• ein System (44) zum Verstellen des Anzeigeblattes (22) und des Projektors (21), wobei das Verstellsystem (44) geeignet ist, das Anzeigeblatt (22) und den Projektor (21) in Bezug auf eine Hauptachse (A1) zwischen einer Mehrzahl von Einstellpositionen zu schwenken.

2. Fahrzeug (11) nach Anspruch 1, bei dem das Verstellsystem (44) geeignet ist, das Anzeigeblatt (22) in Bezug auf die Hauptachse (A1) zwischen einer zurückgezogenen Position, in der das Anzeigeblatt (22) in einen in der Anzeigeeinheit (18) begrenzten Innenraum (40) zurückgezogen ist und einer ausgefahrenen Position, in der das Anzeigeblatt (22) aus dem Innenraum (40) ausgefahren ist, zu schwenken, wobei die ausgefahrene Position des Anzeigeblattes (22) einer der Mehrzahl von Einstellpositionen entspricht.

3. Fahrzeug (11) nach Anspruch 2, bei dem das Verstellsystem (44) eine erste Stellvorrichtung (50) und einen Arm (52) umfasst, wobei der Arm (52) mit dem Anzeigeblatt (22) verbunden ist, wobei die erste Stellvorrichtung (50) geeignet ist, den Arm (52) um die Hauptachse (A1) zu schwenken, um das Schwenken des Anzeigeblattes (22) um die Hauptachse (A1) zwischen der zurückgezogenen Position und der ausgefahrenen Position zu veranlassen.

4. Fahrzeug (11) nach einem beliebigen der Ansprüche 1 bis 3, bei dem eine der Einstellpositionen eine Referenzposition ist, wobei das Verstellsystem (44) geeignet ist, das Anzeigeblatt (22) und den Projektor (21) gemäß der Hauptachse (A1) mit dem gleichen Winkelabstand beidseitig der Referenzposition zu schwenken.

5. Fahrzeug (11) nach Anspruch 4, bei der der maximale Winkelabstand zwischen der Referenzposition und einer Einstellposition unterschiedlich zur Referenzposition plus oder minus 5° beträgt.

6. Fahrzeug (11) nach Anspruch 4 oder 5, bei dem die Referenzposition die Position ist, in der die Mitte des Anzeigeblattes (22) in der Mitte des nicht deformierten Gesichtsfeldes eines Fahrermodells ist.

7. Fahrzeug (11) nach einem beliebigen der Ansprüche 1 bis 6, bei dem das Verstellsystem (44) eine zweite Stellvorrichtung (54) umfasst, wobei die zweite Stellvorrichtung (54) geeignet ist, den Projektor (21) und das Anzeigeblatt (22) um die Hauptachse (A1) zwischen der Mehrzahl von Einstellpositionen zu schwenken

8. Fahrzeug (11) nach den Ansprüchen 3 und 7, bei dem die erste Stellvorrichtung (50) und die zweite Stellvorrichtung (54) in einer selben und einzigen Stellvorrichtung zusammengefasst sind.

9. Fahrzeug (11) nach einem der Ansprüche 1 bis 8, bei dem die Anzeige (80) eine Benutzerschnittstelle (45) aufweist, die geeignet ist, Befehle vom Fahrer des Fahrzeugs (11) zu empfangen, wobei das Verstellsystem (44) abhängig von dem von der Benutzerschnittstelle (45) empfangenen Befehl betätigt wird.

10. Fahrzeug 11) nach einem beliebigen der Ansprüche 1 bis 9, bei dem die Hauptachse (A1) eine den Projektor (21) durchquerende Querachse ist.

## Claims

1. Railway vehicle (11) comprising a driver's cab (10), wherein the driver's cab (10) comprises a head-up display (18), the display (18) comprising:
• a projector (21) able to project images,
• a combiner (22) able to display the images projected by the projector (21), and
• a displacement system (44) for the combiner (22) and the projector (21), the displacement system (44) being able to rotate the combiner (22) and the projector (21) with respect to a main axis (A1) among a plurality of adjustment positions.

2. Vehicle (11) according to claim 1, wherein the displacement system (44) is able to pivot the combiner (22) relative to the main axis (A1) between a retracted position in which the combiner (22) is retracted into a internal space (40) defined in the display (18), and a deployed position in which the combiner (22) is deployed out of the internal space (40), the deployed position of the combiner (22) corresponding to one of the plurality of adjustment positions.

3. Vehicle (11) according to claim 2, wherein the displacement system (44) comprises a first actuator (50) and an arm (52), the arm (52) being integral with the combiner (22), and the first actuator (50) is designed to pivot the arm (52) about the main axis (A1) in order to pivot the combiner (22) about the main axis (A1) between the retracted position and the deployed position.

4. Vehicle (11) according to any one of the claims 1 to 3, wherein one of the adjustment positions is a reference position, the displacement system (44) being designed to rotate the combiner (22) and the projector (21) along the main axis (A1) with the same angular difference on either side of the reference position.

5. Vehicle (11) according to claim 4, wherein the maximum angular difference between the reference position and an adjustment position distinct from the reference position is plus or minus 5 degrees.

6. Vehicle (11) according to claim 4 or 5, wherein the reference position is the position in which the center of the combiner (22) is in the center of the undeformed field of view of a model driver.

7. Vehicle (11) according to any one of the claims 1 to 6, wherein the displacement system (44) comprises a second actuator (54), the second actuator (54) being able to rotate the projector (21) and the combiner (22) about the main axis (A1) among the plurality of adjustment positions.

8. Vehicle (11) according to claims 3 and 7, wherein the first actuator (50) and the second actuator (54) are the same and unique actuator.

9. Vehicle (11) according to any one of the claims 1 to 8, wherein the display (18) comprises a user interface (45) able to receive commands from the driver of the vehicle (11), the displacement system (44) being operated according to the command received by the user interface (45).

10. Vehicle (11) according to any one of the claims 1 to 9, wherein the main axis (A1) is a transverse axis passing through the projector (21).
